# EUROPEAN PATENT APPLICATION

(11) **EP 3 467 626 A1**
(43) Date of publication of application: **10.04.2019**
(21) Application number: 17195417.5
(22) Date of filing: 09.10.2017
(51) Int. Cl.: G06F 3/02, H01H 3/12, H01H 9/18, H01H 13/83

(54) **CONNECTOR, KEY HAVING THE SAME, AND METHOD OF MANUFACTURING THE SAME**

(71) Applicant: Getac Technology Corporation, Taipei City 11568 (TW)
(72) Inventor: SHENG, Yen-Long, 11568 Taipei City (TW)
(74) Representative: Viering, Jentschura & Partner mbB Patent- und Rechtsanwälte

(57) **Abstract**

A key includes a display, a connector, and a supporting structure. The display has a displaying surface and a connecting surface opposing the displaying surface. Electrodes are disposed on the connecting surface. The connector includes a connection dock and substantially bead-shaped conductors. The connection dock supports the display and has through holes. The conductors are substantially disposed in the through holes, respectively, and electrically connected to the electrodes, respectively. The support mechanism is engaged with the connection dock.

## Description

### BACKGROUND OF THE INVENTION

### FIELD OF THE INVENTION

The present invention relates to keys and, more particularly, to a key capable of displaying, a connector of the key, and a method of manufacturing the connector.

### DESCRIPTION OF THE PRIOR ART

Nowadays, computers are required equipment in daily life. A computer essentially comprises a host, monitor, mouse and keyboard. Data and commands given by the host are entered with the keyboard. To readily inform a user of functions associated with keys of the keyboard, respectively, ink marks presented in the form of words, symbols and icons and associated with the functions are printed on the keys, respectively. Opaque, the ink marks are discernible only when illuminated. In an attempt to overcome the application limitation, light-emitting keyboards were developed. A light source is disposed inside each key of a light-emitting keyboard to project a light beam onto a hollowed-out mark on a keycap of the key, so as to form an optical mark thereon. Therefore, users can discern the optical marks even in the dark.

The illumination of the light-emitting keyboards occurs in an all-or-none manner - light is emitted from either all or none of the icons on the same key to the detriment of their discernability. In an attempt to overcome the drawback, related manufacturers developed electronic ink keyboards. However, a conventional electronic ink keyboard also has disadvantages: either its support base must be electroplated to form an electrode which a display can be electrically connected to, or it must be equipped with a flexible flat cable and a terminal connector. The electroplating process not only increases the time taken to manufacture the electronic ink keyboard but also adds to the manufacturing cost of the electronic ink keyboard. The assembly process of the flexible flat cable and the terminal connector is intricate and thus reduces manufacturing efficiency. In view of this, it is necessary to simplify the manufacturing process of electronic ink keyboards and reduce their manufacturing cost.

### SUMMARY OF THE INVENTION

In view of the aforesaid drawbacks of the prior art, the present invention provides a connector, a key having the same, and a method of manufacturing the same, with a view to simplifying the manufacturing process of conventional electronic ink keyboards and reducing their manufacturing cost.

A connector provided by the present invention is adapted to support a display and engage with a support mechanism. The display has a displaying surface and a connecting surface opposing the displaying surface. An electrode is disposed on the connecting surface. The connector comprises a connection dock and a conductor. The connection dock has a supporting surface, an engaging surface opposing the supporting surface, and a through hole penetrating the supporting surface and the engaging surface. The supporting surface supports the connecting surface. The engaging surface has an engaging member. The engaging member is engaged with the support mechanism. The conductors are electrically connected to the electrode. The conductors lie motionlessly in the through hole.

The key provided by the present invention comprises a display, a connector and a support mechanism. The display has a displaying surface and a connecting surface opposing the displaying surface. A plurality of electrodes is disposed on the connecting surface. The connector comprises a connection dock and a plurality of substantially bead-shaped conductors. The connection dock supports the display. The connection dock has a plurality of through holes. The conductors are substantially disposed in the through holes and electrically connected to the electrodes. The support mechanism is engaged with the connection dock.

The method of manufacturing the connector according to the present invention comprises forming a connection dock with a through hole and then placing a substantially bead-shaped conductor in the through hole.

A connector, a key having the same, and a method of manufacturing the same, provided according to the embodiments of the present invention, are characterized by the following features: substantially bead-shaped or spherical conductors of the present invention substitute for conventional electroplated electrodes, flexible flat cables and terminal connectors, thereby allowing the conductors to be electrically connected to the electrodes of a display. Therefore, the present invention is advantageously characterized by forming through holes, which the conductors are to be placed in, on a connection dock just by injection molding and then placing the conductors in the through holes, thereby finishing the process of manufacturing the connector of the key. Therefore, the present invention has advantages as follows: simplifying a process of manufacturing a key capable of displaying and reducing the cost of manufacturing the key.

The description of the contents of the present invention and the description of the implementation of the present invention are intended to illustrate and explain the principles of the present invention and provide further interpretation of the claims of the present invention.

### BRIEF DESCRIPTION OF THE DRAWINGS

FIG. 1 is a perspective view of a key according to the first embodiment of the present invention;
FIG. 2 is an exploded view of the key shown in FIG. 1;
FIG. 3 is an exploded view taken from another angle of the key shown in FIG. 1;
FIG. 4 is a cross-sectional view of the key shown in FIG. 1;
FIG. 5 is a partial enlarged view of conductors and through holes shown in FIG. 4;
FIG. 6 is a schematic view of the process flow of a method of manufacturing a connector of the key shown in FIG. 1;
FIG. 7 is a schematic view of an aspect of the key shown in FIG. 1;
FIG. 8 is a schematic view of another aspect of the key shown in FIG. 1;
FIG. 9 is a schematic view of yet another aspect of the key shown in FIG. 1;
FIG. 10 is a partial cross-sectional enlarged view of the connector according to the second embodiment of the present invention;
FIG. 11 is a partial cross-sectional enlarged view of the connector according to the third embodiment of the present invention; and
FIG. 12 is a partial cross-sectional enlarged view of the connector according to the fourth embodiment of the present invention.

### DETAILED DESCRIPTION OF THE EMBODIMENTS

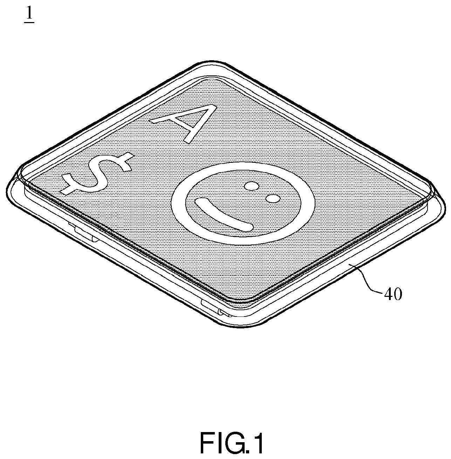

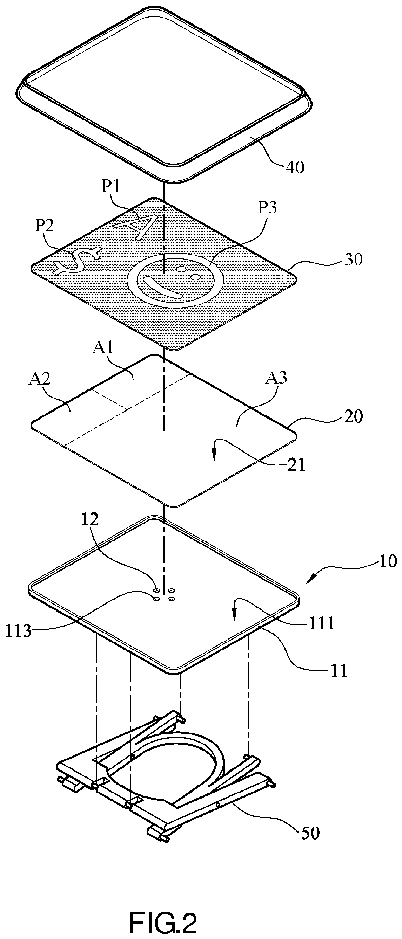

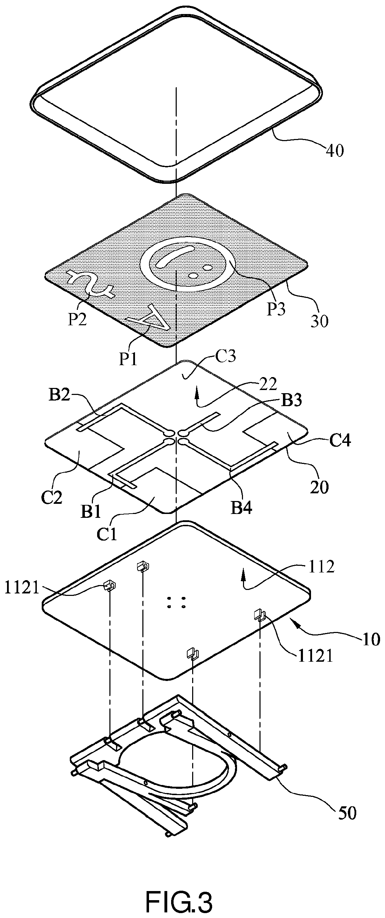

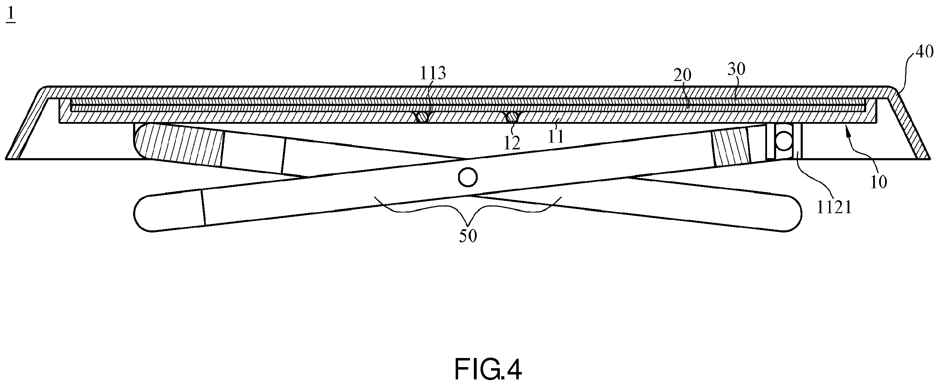

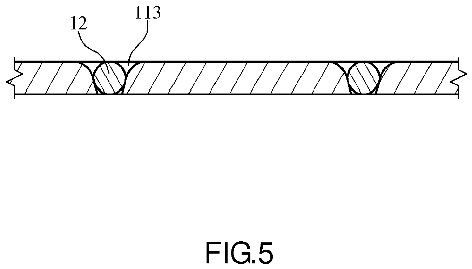

Referring to FIG. 1 through FIG. 5, there are shown in FIG. 1 a perspective view of a key according to the first embodiment of the present invention, in FIG. 2 an exploded view of the key, in FIG. 3 an exploded view taken from another angle of the key, in FIG. 4 a cross-sectional view of the key, and in FIG. 5 a partial enlarged view of conductors and through holes shown in FIG. 4. In this embodiment, a key 1 is, for example, applicable to an electronic ink keyboard, and comprises a connector 10, a display 20, a concealing layer 30, a keycap 40 and a support mechanism 50.

The connector 10 comprises a connection dock 11 and a plurality of conductors 12 which are substantially bead-shaped. The connection dock 11 has a supporting surface 111, an engaging surface 112 substantially parallel to the supporting surface 111, and a plurality of through holes 113. The engaging surface 112 opposes the supporting surface 111 and has an engaging member 1121. The through holes 113 penetrate the supporting surface 111 and the engaging surface 112. In this embodiment, the conductors 12 are steel balls, whereas the through holes 113 taper toward the engaging surface 112, but the present invention is not limited thereto. In a variant embodiment, the through holes 113 taper toward the supporting surface 111. The conductors 12 are disposed in the through holes 113 of the connection dock 11, respectively. In this embodiment, two opposing sides of each substantially bead-shaped conductor 12 are flush with the supporting surface 111 and the engaging surface 112, respectively. However, in another embodiment, two opposing sides of each substantially bead-shaped conductor 12 substantially and slightly protrude from the supporting surface 111 and the engaging surface 112, respectively. In this embodiment, the conductors 12 are bead-shaped steel balls and correspond in size and shape to the through holes 113 so as to fall into and lie motionlessly in the through holes 113, respectively, but the present invention is not limited thereto. In another embodiment, the conductors 12 are made of the other electrically conductive materials and correspond in size and shape to the through holes 113, respectively.

The display 20 has a connecting surface 21 and a displaying surface 22. The supporting surface 111 of the connection dock 11 supports the connecting surface 21 of the display 20. The displaying surface 22 and the connecting surface 21 oppose each other and are substantially parallel to each other.

In this embodiment, an adhesive tape is adhered to the connecting surface 21 beforehand. The adhesive tape is a pressure-sensitive adhesive including an anisotropic conductor in which mutually-insulating electrically-conductive materials are distributed to form electrical conduction paths substantially perpendicular to the surfaces. The four conductors 12 are electrically connected to electrodes B1, B2, B3, B4 through the electrically-conductive materials in the pressure-sensitive adhesive, thereby allowing electrodes B1-B4 to be electrically connected to the conductors 12, respectively.

In this embodiment, the edge of the supporting surface 111 has a flange and thereby forms a recess-shaped receiving space whereby the display 20 is firmly supported and thus restricted in its position relative to the connector 10. Furthermore, when the display 20 is adhered to the supporting surface 111 of the connector 10 by the adhesive tape, the flange ensures the positions of the four conductors 12 relative to the four electrodes B1, B2, B3, B4, but the present invention is not limited thereto. In a variant embodiment, the supporting surface either lacks the flange at all or is partially provided with the flange.

In this embodiment, the display 20 is an electronic ink display which looks completely black or completely white regionally. However, in another embodiment, the display 20 is characterized in that the electrodes B1, B2, B3, B4 are disposed on a lower surface.

In a variant embodiment, the display 20 is thin-paper or thin-plate electronic paper, and a plurality of display areas is defined on the displaying surface 22 of the display 20, wherein appearance or disappearance of symbols within each display area is independently controlled, showing only a single symbol or concurrently a plurality of symbols.

This embodiment is exemplified by three display areas A1, A2, A3. In this embodiment, the three display areas A1-A3 are coupled to the three electrodes B1, B2, B3, respectively, and jointly coupled to the electrode B4. Voltage changes resulting from repetitive galvanization between the electrode B4 and the electrodes B1, B2, B3, respectively, enable the respective display areas to generate brightness-darkness changes or black-white changes, thereby driving the appearance or disappearance of symbols within each display area.

The concealing layer 30 is, for example, a black pigment coated on the display 20. For instance, hollowed-out patterns P1, P2, P3 are formed on the concealing layer 30 by laser plating in a manner that the hollowed-out patterns P1-P3 correspond in position to the display areas A1-A3, respectively. The concealing layer 30 hides the black-white changes of the display 20 so that the black-white changes of the display 20 can only be revealed at the hollowed-out patterns P1, P2, P3. When a brightness-darkness change or black-white change occurs to the displaying surface 22, contrast, brightness, or grayscale of hollowed-out symbols, such as icons and alphabet, shown on the display 20 can be varied in order to change the extent as to how eye-catching the hollowed-out symbols are. In this embodiment, the concealing layer 30 is exemplified by a black pigment, but the present invention is not limited thereto. In a variant embodiment, the concealing layer is a color pigment or the like.

The keycap 40 is disposed above the display 20; hence, the display 20 is disposed between the connection dock 11 and the keycap 40. Therefore, the keycap 40 protects the display 20 against moisture and dust which might otherwise damage the display 20. In this embodiment, the keycap 40 is exemplified by a cover, but the present invention is not limited thereto. In a variant embodiment, the keycap 40 is a plate.

In this embodiment, the keycap 40 is, for example, made of a transparent material so that a user is able to see through the transparent keycap 40 and discern the symbol or icon shown on each key, but the present invention is not limited thereto.

In this embodiment, the concealing layer 30 is coated on the displaying surface 22, but the present invention is not limited thereto. In a variant embodiment, the concealing layer is coated on a transparent keycap, and hollowed-out symbols are formed on the concealing layer by, for example, laser plating.

The support mechanism 50 is, for example, a scissor structure. The scissor structure has four upper fulcrums engaged with four engaging members 1121 of the connection dock 11 and four lower fulcrums engaged with the base of a keyboard (not shown).

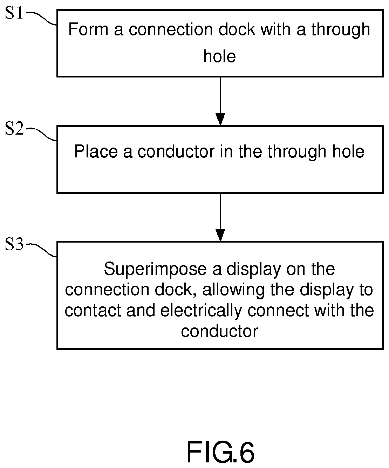

The key in the aforesaid embodiment and a process flow of a method of manufacturing a connector of the key are described below. Referring to FIG. 6, there is shown a schematic view of the process flow of a method of manufacturing a connector of the key. The method comprises steps S1, S2 and S3. Step S1 involves forming the connection dock 11 with the through holes 113 by injection molding, wherein the through holes 113 are integrally formed with the connection dock 11 or additionally formed by drilling or piercing. Referring to FIG. 5, step S2 involves placing the conductors 12 in the through holes 113, whereas step S3 involves superimposing the display 20 on the connection dock 11, thereby not only allowing the display 20 to contact the conductors 12, but also allowing the electrodes B1-B4 to electrically connect with the conductors 12. An adhesive tape is adhered to the connecting surface 21 beforehand. In this embodiment, the adhesive tape is a pressure-sensitive adhesive including an anisotropic conductor in which mutually-insulating electrically-conductive materials are distributed to form electrical conduction paths substantially perpendicular to the surfaces. The four conductors 12 are electrically connected to the electrodes B1, B2, B3, B4 through the electrically-conductive materials in the pressure-sensitive adhesive.

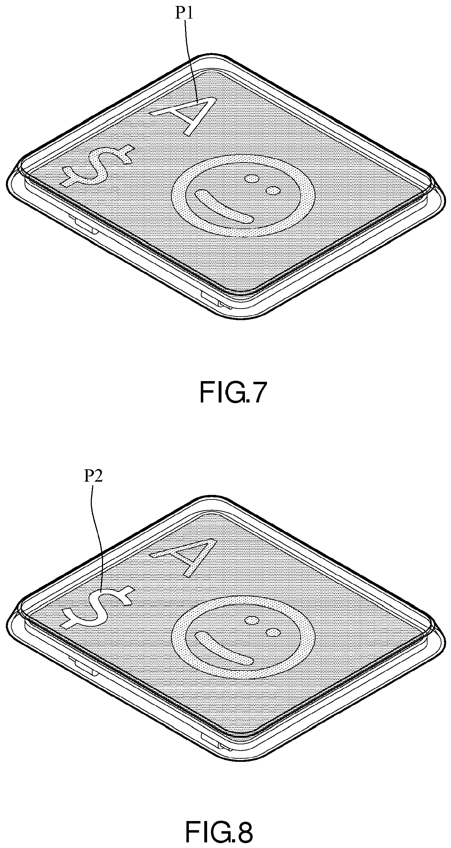

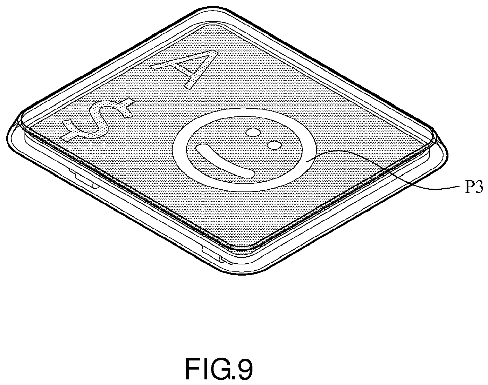

The way of controlling the display areas A1-A3 is described below. Referring to FIG. 2, FIG. 3, FIG. 7 through FIG. 9, there are shown in FIG. 7 a schematic view of an aspect of the key, in FIG. 8 a schematic view of another aspect of the key, and in FIG. 9 a schematic view of yet another aspect of the key.

The display areas A1-A3 are each controlled by a respective first control signal and a common second control signal. The first control signal and the second control signal are electrically opposite. For instance, if the first control signal is electrically positive, the second control signal will be electrically negative. For instance, if the electrode B1 receives the first control signal and the electrode B4 receives the second control signal, the electronic ink of the display area A1 will turn from black to white, thereby displaying the hollowed-out pattern P1 corresponding in position to the display area A1, as shown in FIG. 7. If the electrode B2 receives the first control signal and the electrode B4 receives the second control signal, the electronic ink of the display area A2 will turn from black to white, thereby displaying the hollowed-out pattern P2 corresponding in position to the display area A2, as shown in FIG. 8. If the electrode B3 receives the first control signal and the electrode B4 receives the second control signal, the electronic ink of the display area A3 will turn from black to white, thereby displaying the hollowed-out pattern P3 corresponding in position to the display area A3, as shown in FIG. 9.

After the electronic ink display 20 has received the control signals, the electronic ink turns from black to white, thereby displaying the hollowed-out pattern corresponding in position to the display area, but the present invention is not limited thereto. In a variant embodiment, the electronic ink turns from white to black, thereby displaying the corresponding hollowed-out pattern.

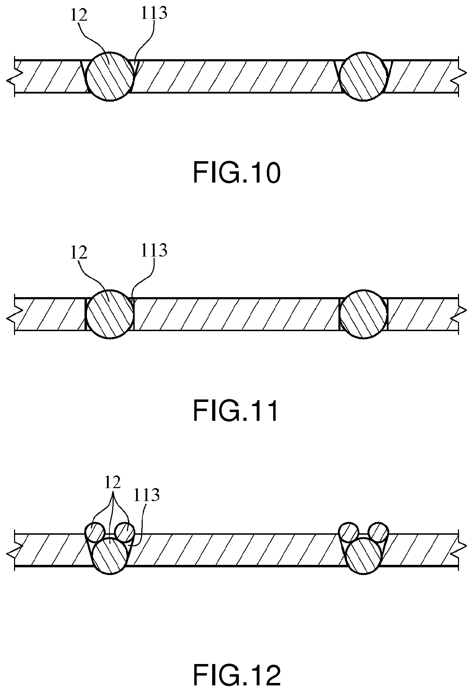

In the embodiment illustrated by FIG. 1, two opposing sides of each conductor 12 are flush with the supporting surface 111 and the engaging surface 112, respectively, but the present invention is not limited thereto. Referring to FIG. 10, there is shown a partial cross-sectional enlarged view of the connector according to the second embodiment of the present invention. In this embodiment, two opposing sides of each conductor 12 protrude from the supporting surface 111 and the engaging surface 112, respectively.

In the embodiment illustrated by FIG. 1, the through holes 113 are taper, but the present invention is not limited thereto. Referring to FIG. 11, there is shown a partial cross-sectional enlarged view of the connector according to the third embodiment of the present invention. In this embodiment, the through holes 113 are cylindrical and have a smaller diameter than the conductors 12 so that the conductors 12 fit in the through holes 113, respectively, whereas two opposing sides of each conductor 12 protrude from the supporting surface 111 and the engaging surface 112, respectively.

In the embodiment illustrated by FIG. 1, one and only one said conductor 12 is disposed in each said through hole 113, but the present invention is not limited thereto. Referring to FIG. 12, there is shown a partial cross-sectional enlarged view of the connector according to the fourth embodiment of the present invention. In this embodiment, multiple said conductors 12 are disposed in each said through hole 113.

A connector, a key having the same, and a method of manufacturing the same, provided according to the embodiments of the present invention, are characterized by the following features: substantially bead-shaped or spherical conductors of the present invention substitute for conventional electroplated electrodes, flexible flat cables and terminal connectors, thereby allowing the conductors to be electrically connected to the electrodes of a display. Therefore, the present invention is advantageously characterized by forming through holes, which the conductors are to be placed in, on a connection dock just by injection molding and then placing the conductors in the through holes, thereby finishing the process of manufacturing the connector of the key. Therefore, the present invention has advantages as follows: simplifying a process of manufacturing a key capable of displaying, reducing the cost of manufacturing the key, enabling the display disposed above a support mechanism to transmit control signals through the conductors, simplifying a transmission path of the control signals greatly, thereby rendering it feasible to commercialize and popularize a keyboard with keys each equipped with a display and capable of displaying.

Although the present invention is disclosed above by preferred embodiments, the preferred embodiments are not restrictive of the present invention. Changes and modifications made by persons skilled in the art to the preferred embodiments without departing from the spirit and scope of the present invention must be deemed falling within the scope of the present invention. Accordingly, the legal protection for the present invention should be defined by the appended claims.

## Claims

1. A connector, adapted to support a display and engage with a support mechanism, the display having a displaying surface and a connecting surface opposing the displaying surface, with an electrode disposed on the connecting surface, the connector comprising:
a connection dock having a supporting surface, an engaging surface opposing the supporting surface, and a through hole penetrating the supporting surface and the engaging surface, wherein the supporting surface supports the connecting surface, with an engaging member disposed on the engaging surface and engaged with the support mechanism; and
a conductor connecting electrically with the electrodes and lying motionlessly in the through hole.

2. The connector of claim 1, wherein the conductor is substantially bead-shaped and is disposed in the through hole.

3. The connector of claim 2, wherein the conductor is substantially flush with or substantially protrudes from the supporting surface and the engaging surface.

4. The connector of claim 2, wherein the conductor is a steel ball, whereas the through hole tapers toward one of the supporting surface and the engaging surface.

5. A key, comprising:
a display having a displaying surface and a connecting surface opposing the displaying surface, wherein a plurality of electrodes is disposed on the connecting surface;
the connector of claim 1, including a connection dock and a plurality of substantially bead-shaped conductors, the connection dock supporting the display and having a plurality of through holes, with the conductors substantially disposed in the through holes, respectively, and electrically connected to the electrodes, respectively; and
a support mechanism engaged with the connection dock.

6. The key of claim 5, wherein the connection dock has a supporting surface and an engaging surface opposing the supporting surface, with the through holes penetrating the supporting surface and the engaging surface, with the conductors lying motionlessly in the through holes, respectively, wherein the supporting surface supports the connecting surface, and a plurality of engaging members is disposed on the engaging surface, allowing the support mechanism to be engaged with the engaging members.

7. The key of claim 5, wherein the conductors are steel balls, and the through holes taper toward one of the supporting surface and the engaging surface.

8. The key of claim 5, further comprising a keycap, wherein the display is disposed between the connection dock and the keycap.

9. The key of claim 5, wherein the displaying surface has a plurality of display areas, and the display areas are electrically connected to the electrodes.

10. The key of claim 9, further comprising a concealing layer having a plurality of hollowed-out patterns, with the hollowed-out patterns corresponding in position to the display areas, respectively, wherein the concealing layer is disposed on one of the keycap and the displaying surface.

11. A method of manufacturing the connector of claim 1, comprising the steps of:
forming a connection dock with a through hole; and
placing a substantially bead-shaped conductor in the through hole.

12. The method of claim 11, wherein the step of forming the connection dock is performed by injection molding.
